# EUROPÄISCHE PATENTSCHRIFT

(11) **EP 3 129 802 B1**
(45) Veröffentlichungstag und Bekanntmachung des Hinweises auf die Patenterteilung: **28.07.2021**
(21) Anmeldenummer: 15718154.6
(22) Anmeldetag: 02.04.2015
(51) Int. Cl.: G01S 5/30, G01S 15/87, G05B 19/418

(54) **FERTIGUNGSASSISTENZVORRICHTUNG MIT EINER ULTRASCHALLORTUNGSEINHEIT**
MANUFACTURING ASSISTANCE DEVICE HAVING AN ULTRASOUND LOCATING UNIT
DISPOSITIF D'AIDE À LA FABRICATION AVEC UNITÉ DE LOCALISATION AUX ULTRASONS

(30) Priorität: 08.04.2014 DE 102014005104
(43) Veröffentlichungstag der Anmeldung: 15.02.2017
(73) Patentinhaber: Sarissa GmbH, 88250 Weingarten (DE)
(72) Erfinder: RODE, Reinhard, 74081 Heilbronn (DE); JAUCH, Volker, 88255 Baienfurt (DE)
(74) Vertreter: Otten, Roth, Dobler & Partner mbB Patentanwälte
(86) Internationale Anmeldenummer: PCT/EP2015/057372
(87) Internationale Veröffentlichungsnummer: WO 2015/155130

(56) Entgegenhaltungen:
- DE-A1-102009 054 712
- YONGCAI WANG ET AL: "LOCK: A Highly Accurate, Easy-to-Use Location-Based Access Control System", LOCATION AND CONTEXT AWARENESS, SPRINGER BERLIN HEIDELBERG, BERLIN, HEIDELBERG, Bd. 5561, 7. Mai 2009 (2009-05-07), Seiten 254-270, XP019117860, ISBN: 978-3-642-01720-9
- None

## Beschreibung

Die Erfindung betrifft eine Fertigungsassistenzvorrichtung sowie ein Fertigungsassistenzverfahren mit einer Ultraschallortungseinheit zur Ultraschallortung von Sendern zum Senden von Ultraschall oder von mit den Sendern verbundenen Gegenständen, wie Werkzeuge und/oder Werkstücke und/oder Bauelemente oder dergleichen, nach den Oberbegriffen der Ansprüche 1 bzw. 8.

### Stand der Technik

Zur Verbesserung von Fertigungsprozessen sind Assistenzsysteme bzw. Überwachungssysteme bekannt geworden, mittels denen die Werkstücke bzw. Werkzeuge zum einen überwacht und zum anderen die Fertigung bzw. Montage auch begleitet werden kann. So ist in der EP 1 645 921 B1 eine Überwachung der Bewegung einer menschlichen Hand oder eines manuell geführten Bauteiles, insbesondere eines Werkzeugs, beschrieben. Hierin wird zur Verbesserung von Fertigungsprozessen die Verfolgung und Aufzeichnung von Bewegungsabläufen eines Werkzeugs, z.B. eines Schraubers, vorgeschlagen. Beispielsweise kann damit die Korrektheit einer vorgegebenen Reihenfolge von hintereinander durchzuführenden Fertigungsschritten, wie z.B. die Anbringung einer bestimmten Anzahl von Schrauben an bestimmten, vorgegebenen Positionen überwacht und dokumentiert werden.

Im Handel sind hierzu bereits Ortungsvorrichtungen, die eine Empfangseinheit mit drei Empfängern für Ultraschallsignale umfassen. Die Empfangseinheit ist über eine an Werkzeugen angebrachte Sendeeinheit mit drei Sendern mittels Laufzeitmessungen von Signalen der Sender in der Lage, die Sendeeinheit zu orten und hierbei deren Position bzw. die der entsprechenden Werkzeuge/Gegenstände zu ermitteln. Hierdurch sind eine Ortung der Werkzeuge sowie eine Bestimmung der Orientierung der Werkzeuge möglich. Somit kann durch Verfolgung der Werkzeugbewegungen die Abfolge von Prozessschritten, beispielsweise Verschraubungen, erfasst werden. Wird gleichzeitig ein Werkzeugparameter, beispielsweise der Betriebszustand und/oder das Drehmoment eines Schraubers erfasst, so kann nicht nur die korrekte Abfolge, sondern auch die korrekte Stärke der Verschraubung überprüft werden.

Beispielsweise über einen Monitor kann einer Bedienperson des Werkzeugs die als nächstes zu bearbeitende Verschraubung bzw. der nächste Montageschritt angezeigt und somit die Abfolge der Tätigkeiten erleichtert werden. Bei Nichteinhaltung der vorgegebenen Prozessschritte kann ein Warnsignal gegeben und/oder das Werkzeug außer Betrieb gesetzt werden. Auf diese Weise bietet das System der Bedienperson aufgrund der Prozessführung eine enorme Hilfestellung, wobei zugleich eine Qualitätssicherung gewährleistet ist.

Zur eindeutigen Bestimmung der Position der zu überwachenden Gegenstände bzw. Sendereinheit weist die Empfangseinheit ein Koordinatensystem auf, sodass die Position des zu ortenden Gegenstandes bzw. des Senders im Raum eindeutig beschrieben bzw. bestimmt werden kann. Dementsprechend ist im zu überwachenden Aktionsraum des Empfängers ein Koordinatensystem definiert, das als Bezugsgröße sowohl für die Sendereinheit als auch für die Empfangseinheit gilt.

Nachteilig ist jedoch, dass sowohl die Empfangseinheit als auch die Sendereinheit technisch bedingt einen begrenzten Sende- bzw. Empfangsbereich und somit einen begrenzten Aktionsbereich und somit Ortungsbereich aufweisen.

Dies ist vor allem deshalb von Nachteil, da die Ultraschall-Sendeeinheiten meistens mobil sind bzw. an einem mobilen Werkzeug angeordnet sind, sodass zur Energieversorgung der Sendereinheit und/oder des Werkzeugs keine kabelgebundene Energieversorgung realisiert werden kann. Durch die Energieversorgung mittels Batterien oder Akkumulatoren können im Allgemeinen auch nur begrenzte Sendeleistungen und somit Reichweiten generiert werden, sodass gerade bei der Verwendung von mobilen Sendern oder Empfängern der Aktionsbereich des Systems deutlich begrenzt ist.

Bei den bislang bekannten Systemen mit Ultraschallortung ist der bislang realisierte Aktionsbereich auf ca. 4 m Radius begrenzt. Bei modernen (industriellen) Fertigungsprozessen mit Montagebändern, insbesondere im Automobilbereich oder dergleichen, sind jedoch Aktionsbereiche von 4 m Radius, das heißt 8 m Durchmessern, vielfach zu klein, um eine sinnvolle oder möglichst vollständige Fertigungsassistenz gewährleisten zu können.

YONGCAI WANG ET AL.: "LOCK: A Highly Accurate, Easy-to-Use Location-Based Access Control System", 7. Mai 2009, offenbart eine positionsbasierte Zugriffsteuerung, bei der für mehrere Lokalisierungsempfänger mit jeweils verschiedenen Koordinatensystemen durch Kalibrierung ein gemeinsames Koordinatensystem erzeugt wird.

### Aufgabe und Vorteile der Erfindung

Aufgabe der Erfindung ist demgegenüber, eine Fertigungsassistenzvorrichtung bzw. ein Fertigungsassistenzverfahren mit einer Ultraschallortung zur Ultraschallortung von Sendern oder von mit den Sendern verbundenen Gegenständen vorzuschlagen, womit ein gegenüber dem Stand der Technik erheblich erweiterter Aktionsbereich bzw. Aktionsraum sowie möglichst eine flexible Anpassung an unterschiedlichste Fertigungsprozesse realisiert wird.

Diese Aufgabe wird, ausgehend von einer Vorrichtung und einem Verfahren der einleitend genannten Art, jeweils durch die Merkmale der Ansprüche 1 bzw. 8 gelöst. Durch die in den Unteransprüchen genannten Maßnahmen sind vorteilhafte Ausführungen und Weiterbildungen der Erfindung möglich.

Bei der erfindungsgemäßen Vorrichtung ist wenigstens eine zweite Empfangseinheit zum Empfangen von Ultraschall mittels Laufzeitmessung des Ultraschallmesssignals vorgesehen, wobei der zweiten Empfangseinheit ein zweites, einen zweiten Koordinatenursprung und/oder eine andere Raumorientierung umfassendes Koordinatensystem zur Bestimmung der Position des Senders und/oder des Gegenstands mit zweiten Koordinaten zugeordnet ist, und dass eine Koordinatentransformationseinheit zum Transformieren zumindest eines der wenigstens zwei Koordinatensysteme vorgesehen ist, sodass den wenigstens zwei Empfangseinheiten ein gemeinsames, einen gemeinsamen Koordinatenursprung und/oder eine gemeinsame Raumorientierung umfassendes Koordinatensystem zugeordnet ist.

Mit Hilfe dieser Maßnahme kann das Fertigungsassistenzsystem flexibel an unterschiedlichste Anforderungen und Räumlichkeiten angepasst und in vorteilhafter Weise modular erweitert werden, wobei nicht nur ein zweiter, sondern bei Bedarf eine nahezu unbegrenzte Vielzahl an weiteren Empfangseinheiten vorgesehen werden kann bzw. der bereits vorhandenen bzw. ersten Empfangseinheit hinzugefügt werden kann. Beispielsweise kann mit zwei oder mehreren erfindungsgemäßen Empfangseinheiten im Wesentlichen ein gesamter Bereich eines Montagebandes oder dergleichen abgedeckt werden, sodass eine vollständige Überwachung einer Fertigung längs eines entsprechenden Montagebandes realisierbar ist.

So ist denkbar, dass beispielsweise mit einer matrixartigen Anordnung zahlreicher Empfangseinheiten nahezu die gesamte Fertigungshalle entsprechend überwacht bzw. hierin die Sender oder Gegenstände geortet und dem gemeinsamen Koordinatensystem zugeordnet werden können.

Mit Hilfe der vorteilhaften Koordinatentransformationseinheiten ist es möglich, dass in vorteilhafter Weise die jeweils separaten Empfangseinheiten jeweils an einer bestimmten bzw. beliebigen Position montiert bzw. fixiert werden können, wobei jede separate Empfangseinheit zunächst jeweils ein eigenes Koordinatensystem mit eigenem Koordinatenursprung und/oder eigener Raumorientierung aufweist. Durch die vorteilhafte Transformation der Koordinatensysteme zu einem gemeinsamen Koordinatensystem mit gemeinsamen Koordinatenursprung und/oder gemeinsamer Raumorientierung ist es nunmehr möglich, dass die Position eines Gegenstands bzw. Senders vollständig erfassbar ist und geortet werden kann, selbst wenn dieser von einem Empfangsbereich zu einem anderen Empfangsbereich bewegt bzw. verstellt wird. So kann der Sender bzw. Gegenstand auch bei einem Übertritt vom ersten Aktions- bzw. Empfangsbereich in den zweiten Aktions- bzw. Empfangsbereich eindeutig erfasst bzw. geortet und dessen Position eindeutig bestimmt sowie bezeichnet werden.

Dementsprechend wird mit mehreren Empfangseinheiten ein gemeinsamer, ggf. innerhalb des Fertigungsbereichs nahezu unbegrenzter Aktions- und Empfangsbereich mit gemeinsamem bzw. einheitlichem Koordinatensystem generiert. So ist auch bei großen Fertigungsprozessen beispielsweise mit sehr großen bzw. langen Montagebändern, wie z.B. in der Automobilproduktion oder dergleichen, eine vorteilhafte Fertigungsassistenz einsetzbar. Folglich kann die erfindungsgemäße Fertigungsassistenzvorrichtung mit Hilfe einer vorteilhaften Variation der Anzahl verwendeter Empfangseinheiten für unterschiedlichste Fertigungsprozesse bzw. Fertigungsbedingungen angepasst bzw. eingesetzt werden.

Eine Vergrößerung des Aktionsbereichs wäre durchaus auch mit Hilfe einer verstärkten Sende- bzw. Empfangsleistung entsprechender Komponenten denkbar. Hierbei wird jedoch eine sehr starke Sendeleistungsvergrößerung notwendig, die gerade bei mobilen bzw. drahtlosen Sendern nur mit erheblichem, großem wirtschaftlichen und konstruktiven Aufwand möglich wäre. So ist beispielsweise beim Einsatz von Akkuschraubern die Sendeleistung und somit die Reichweite aufgrund der Energieversorgung durch den Akku oder die Batterie bzw. durch das Gesamtgewicht des den Sender umfassenden Schraubers begrenzt. Eine Bedienperson kann nur über eine längere Zeit mit dem entsprechenden Werkzeug arbeiten, wenn dies nicht zu schwer und somit der Akku bzw. die Batterie nicht zu schwer ist.

Demzufolge ist ein Fertigungsassistenzvorrichtungssystem in vorteilhafter Weise für mobile und/oder manuell geführte Anwendungen bzw. mobile und/oder manuell geführte Sender/Gegenstände verwendbar. Hiermit wird eine praktikable und effiziente bzw. wirtschaftlich günstige Ortung realisiert.

Vorteilhafterweise sind das/die Koordinatensysteme als dreidimensionale und/oder geradlinige und/oder orthogonale Koordinatensysteme ausgebildet. Hiermit kann in vorteilhafterweise eine Ortung von Sendern bzw. einen Sender aufweisende Gegenstände realisiert werden, die sich dreidimensional im Raum bewegen bzw. anordenbar sind, was gerade bei mobilen und/oder manuell geführten Anwendungen von Vorteil ist.

Beispielsweise ist eine Empfangseinheit mit nur einem einzelnen Ultraschall-Empfänger denkbar, wobei zum Beispiel zur exakten Festlegung eines dreidimensionalen, orthogonalen Koordinatensystems diese Empfangseinheit weitere Komponenten zur Festlegung/Bestimmung vor allem der Raumorientierung bzw. Koordinatenachsen benötigt. Beispielsweise kann mit Hilfe wenigstens eines vorteilhaften Sensors bzw. Kompasses oder dergleichen ein Koordinatenvektor in Richtung Nordpol bzw. Südpol und zusätzlich mit Hilfe eines weiteren Sensors wie eines Lotsensors bzw. Gravitationssensors ein Vektor bzw. eine Achse, der/die auf die Erdmitte hin ausgerichtet ist, generiert werden. Hiermit kann bereits mit einem einzelnen Ultraschall-Empfänger eine eindeutige Festlegung eines dreidimensionalen, orthogonalen Koordinatensystems realisiert werden, wobei beispielsweise der Koordinatenursprung exakt im Mittelpunkt des Empfängers angeordnet ist.

Vorzugsweise umfasst die (vorzugsweise als Baueinheit ausgebildete) erste und/oder zweite und/oder dritte und/oder vierte bzw. n-te Empfangseinheit jeweils mindestens drei Empfänger, insbesondere Ultraschall-Empfänger, die mit einer Dreieckanordnung eindeutig eine Ebene bzw. Fläche des Koordinatensystems generieren, zu der jeweils senkrecht bzw. orthogonal die dazugehörige dritte Dimension bzw. Koordinatenachse ausgerichtet ist. Beispielsweise sind die drei Empfänger der jeweiligen Empfangseinheit in einem gleichschenkligen Dreieck angeordnet, wobei vorzugsweise der Mittelpunkt des gleichschenkligen Dreiecks den Koordinatenursprung des jeweiligen Koordinatensystems dieser Empfangseinheit bildet. Auch kann in vorteilhafter Weise senkrecht zu dem (gleichschenkligen) Dreieck am Koordinatenursprung die dritte orthogonale Achse des jeweiligen Koordinatensystems angeordnet werden.

Im Sinn der Erfindung weist die jeweilige Empfangseinheit bzw. Baueinheit jeweils ein eigenes bzw. eigenständiges Koordinatensystem auf, das vorzugsweise drei zusammenwirkende Komponenten zur exakten Festlegung des jeweiligen, eigenen Koordinatenursprungs und der jeweiligen, eigenen Raumorientierung bzw. der drei Koordinatenachsen aufweist. Das heißt wie oben dargelegt, dass eine Empfangseinheit z.B. drei Ultraschall-Komponenten bzw. Ultraschall-Empfänger oder ggf. eine Ultraschall-Komponente und zudem ein Kompass sowie ein Lot umfasst. Eine derartige einzelne Empfangseinheit bzw. Baueinheit ist aufgrund ihres eigenen, exakt festgelegten Koordinatensystems bereits für sich betriebsbereit zur eindeutigen Ortung von Sendern bzw. Gegenständen bei Fertigungsprozessen.

So wird in vorteilhafter Weise das jeweilige Koordinatensystem der jeweiligen Empfangseinheit bzw. Baueinheit jeweils für sich exakt festgelegt und dies bereits durch die bzw. mit der Herstellung der jeweiligen Empfangseinheit. Die jeweilige Empfangseinheit im Sinn der Erfindung ist demzufolge vor der Koordinatentransformation gemäß der Erfindung unabhängig von anderen, weiteren Empfangseinheiten des Fertigungsassistenzsystems herstellbar und mit einem eigenen, definierten (vorzugsweise dreidimensionalen) Koordinatensystem am jeweiligen Ort bzw. ihrer Position im Fertigungsbereich montierbar/fixierbar. Bei Letzteren müssen keine hohen Genauigkeitsanforderungen in Bezug auf die konkrete Position und/oder Ausrichtung der jeweiligen Empfangseinheit mit ihrem integrierten jeweiligen Koordinatensystem erfüllt werden. So können auch wenig qualifizierte Personen das Fertigungsassistenzsystem installieren und in Betrieb nehmen.

In vorteilhafter Weise umfasst die erste Empfangseinheit ihr eigenes erstes Koordinatensystem und die zweite Empfangseinheit ihr eigenes zweites Koordinatensystem, wobei diese beiden separaten Koordinatensysteme dieser beiden separaten Empfangseinheiten zum Zeitpunkt der Montage am jeweiligen Ort bzw. ihrer Position anfangs unabhängig voneinander sind. Erst mit Hilfe der Koordinatentransformation der Koordinatentransformationseinheit wird das gemeinsame Koordinatensystem der Fertigungsassistenzvorrichtung gemäß der Erfindung generiert. Hiermit wird es möglich, dass diese zwei oder mehr Empfangseinheiten beispielsweise in einer Fertigungshalle bzw. beliebig im Raum angeordnet bzw. fixiert werden können, ohne dass ein exaktes Positionieren und ohne dass ein exaktes Ausrichten der jeweiligen separaten Empfangseinheiten bzw. Koordinatensysteme notwendig ist.

Das heißt jedoch auch, dass grundsätzlich um ein gemeinsames Koordinatensystem von zwei oder mehreren Empfangseinheiten generieren zu können, wäre es auch denkbar, die jeweiligen Empfangseinheiten exakt zueinander zu positionieren und zudem exakt zueinander ausgerichtet zu montieren. Allerdings müssten die zum Beispiel zwei Empfangseinheiten hierbei dann sowohl in Bezug auf ihren Abstand als auch in Bezug auf ihre räumliche Orientierung exakt nach Vorgabe montiert werden, um im gemeinsamen Betrieb mittels einer einfachen Aneinanderreihung der beiden separaten Koordinatensysteme ein zusammenhängendes Koordinatensystem erhalten zu können. Hierzu wäre jedoch ein enormer Aufwand bei der Positionierung und Ausrichtung der beiden bzw. mehreren Empfangseinheiten notwendig, was erheblichen zeitlichen und wirtschaftlichen Aufwand bedeutet und dies zudem hochqualifizierte Fachkräfte durchführen müssten.

Gemäß der Erfindung weist die erste Empfangseinheit einen ersten Empfangsbereich und die zweite Empfangseinheit einen zweiten Empfangsbereich auf, wobei die wenigstens zwei Empfangsbereiche einen gemeinsamen Überlappungsbereich umfassen, wobei der Überlappungsbereich als Transformationsbereich der Koordinatentransformationseinheit ausgebildet ist und wobei während einer Transformationsphase wenigstens ein Sender im Transformationsbereich angeordnet ist und/oder sich bewegt. Hiermit wird es möglich, dass die wenigstens zwei Empfangseinheiten nahezu beliebig, jedoch mit einem gemeinsamen Überlappungsbereich der einzelnen Ortungs- bzw. Empfangsbereiche, und ohne großen messtechnischen Aufwand positioniert bzw. an einem vorgegebenen Ort angeordnet bzw. fixiert werden. Hierbei ist weder der exakte Abstand, noch die jeweilige exakte Ausrichtung der beiden oder mehreren Empfangseinheiten zueinander bzw. im Raum, d.h. z.B. in der Fertigungshalle oder dergleichen, notwendig. Vielmehr kann mit Hilfe dieser vorteilhaften Ausführungsform der Erfindung und dem hierbei verwendeten Sender im gemeinsamen bzw. überlappenden Transformationsbereich eine vorteilhafte Erzeugung des gemeinsamen Koordinatensystems realisiert werden.

Dabei orten sowohl die erste Empfangseinheit als auch die zweite Empfangseinheit und gegebenenfalls eine weitere Empfangseinheit den Sender an einer bestimmten Position, insbesondere zur gleichen Zeit oder zumindest nahezu gleichzeitig, sodass die exakte Position des Senders an diesem Punkt bzw. Ort sowohl von der ersten Empfangseinheit als auch von der zweiten/anderen Empfangseinheit bestimmt werden kann. Hiermit kann eine vorteilhafte Transformation bzw. ein Abgleich/Umrechnung der zunächst separaten, unterschiedlichen Ortsangaben bzw.

Koordinaten der einzelnen, unterschiedlichen Koordinatensysteme der einzelnen Empfangseinheiten mit Hilfe der Koordinatentransformationseinheit realisiert werden. Vorzugsweise umfasst die Koordinatentransformationseinheit eine mathematische, insbesondere elektronische Berechnungsvorrichtung zum mathematischen Berechnen der Koordinatentransformation bzw. der Umrechnung zumindest des einen zu transformierenden Koordinatensystems.

Beispielsweise kann mit zwei denkbaren, oben kurz dargelegten, speziellen Empfangseinheiten, die jeweils einen einzigen Ultraschall-Empfänger und einen Kompasssensor sowie einen Lotsensor aufweisen, zumindest theoretisch bereits mit Hilfe eines einzelnen Punktes bzw. Ortes des Senders, der von den zwei Empfangseinheiten jeweils für sich geortet werden kann, eine vorteilhafte Transformation der beiden ursprünglich separaten Koordinatensysteme zu einem gemeinsamen Koordinatensystem realisiert werden.

Vorteilhafterweise ist der Sender während der Transformationsphase an wenigstens drei voneinander beabstandeten, unterschiedlichen Transformationspositionen innerhalb des Transformationsbereiches angeordnet. Hiermit wird es möglich, dass durch die drei voneinander beabstandeten, unterschiedlichen Transformationspositionen eine Fläche bzw. eindeutig bestimmte Ebene, d. h. eine Transformationsebene, im Raum definiert ist. Aufgrund dieser in der Transformationsphase ermittelten Transformationsposition bzw. Transformationsebene ist eine vorteilhafte Koordinatentransformation mit Hilfe der Koordinatentransformationseinheit realisierbar. So können die unterschiedlichen Positionsinformationen der ersten Empfangseinheit in Bezug zu den Positionsinformationen der zweiten Empfangseinheit in vorteilhafter Weise zueinander berechnet bzw. transformiert werden, sodass ein gemeinsames Koordinatensystem realisiert wird.

In einer vorteilhaften Variante der Erfindung sind während der Transformationsphase wenigstens zwei Transformationspositionen des Senders innerhalb des Transformationsbereichs im Wesentlichen parallel zu einer Längsachse und/oder Bearbeitungsrichtung einer Bearbeitungsanlage zum Bearbeiten oder Fertigen von Werkstücken und/oder Produkten ausgerichtet. Es hat sich gezeigt, dass durch die beiden vorteilhaften, im Wwesentlichen parallel zu einer Längsachse und/oder Bearbeitungsrichtung einer Bearbeitungsanlage bzw. einem Montageband oder dergleichen ausgerichteten Transformationspositionen eine vorteilhafte Fertigungsassistenzvorrichtung realisiert werden kann. So wird nicht nur das gemeinsame Koordinatensystem realisierbar, sondern vielmehr wird zugleich ohne großen, insbesondere berechnungstechnischen Aufwand eine Abstimmung bzw. vorteilhafte Ausrichtung mit der Bearbeitungsanlage bzw. dem Montageband möglich. Dies reduziert in erheblichem Maß den Berechnungs-/Softwareaufwand für die vorteilhafte Fertigungsassistenzvorrichtung gerade bei einem Einsatz an einer langgestreckten Bearbeitungsanlage bzw. einem Montageband oder dergleichen.

Darüber hinaus kann eine vorteilhafte Abstimmung der Fertigungsassistenzvorrichtung z.B. mit Betriebs-/Steuerdaten der Bearbeitungsanlage bzw. des Montagebands oder dergleichen verwirklicht werden. Beispielswese sind entsprechende Montageschritte bzw. Fertigungsprozessparameter bereits in Bezug zur Längsachse der Bearbeitungsanlage bzw. des Montagebandes bekannt. Durch eine vorteilhafte Abstimmung bzw. Ausrichtung des gemeinsamen Koordinatensystems mit der Längsachse bzw. der Bearbeitungsanlage kann sich der Softwareaufwand bzw. der steuerungstechnische Aufwand für die Fertigungsassistenzvorrichtung in vorteilhafter Weise reduzieren. Vorzugsweise sind der gemeinsame Koordinatenursprung und/oder die gemeinsame Raumorientierung des gemeinsamen Koordinatensystems auf der Längsachse der Bearbeitungsanlage angeordnet. Zum Beispiel ist der Koordinatenursprung am Anfang bzw. an einem Ende der Bearbeitungsanlage bzw. des Montagebandes angeordnet.

Beispielsweise kann eine Person während der Transformationsphase einen Sender bzw. einen Gegenstand mit einem Sender, wie zum Beispiel einen Akkuschrauber oder dergleichen, in der Hand halten bzw. führen, wobei diese Person die drei voneinander beabstandeten unterschiedlichen Transformationspositionen der Reihe nach einnimmt oder abschreitet. Dies kann in vorteilhafter Weise auch eine ungeübte Person bzw. eine Person ohne tiefgehende Fachkenntnis bezüglich der Koordinatentransformation oder der Ultraschallortung durchführen. Dementsprechend praxistauglich und ohne großen Aufwand kann das gemeinsame Koordinatensystem generiert werden, selbst unter schwierigeren Praxisbedingungen.

So kann beispielsweise in einer Fertigungshalle oder dergleichen eine erste Empfangseinheit an einem ersten Ort ausgerichtet bzw. fixiert werden und anschließend davon beabstandet, die zweite Empfangseinheit an einem zweiten Ort mit (fast) beliebiger Ausrichtung bzw. Position in Bezug zum ersten Ort montiert bzw. fixiert werden, wobei lediglich der gemeinsame Überlappungsbereich vorzusehen ist. In einer anschließenden Transformationsphase wird in vorteilhafter Weise mit Hilfe des Transformationsbereiches und dem oder den Sendern, die innerhalb des Transformationsbereiches angeordnet und/oder bewegt werden, eine vorteilhafte Koordinatentransformation der ursprünglich zwei separaten Subkoordinatensysteme zu einem gemeinsamen Koordinatensystem mit gemeinsamen Koordinatenursprung und/oder gemeinsamer Raumorientierung durchgeführt.

In einer besonderen Weiterbildung der Erfindung ist der Sender während der Transformationsphase an wenigstens fünfzig oder hundert oder sogar dreihundert voneinander beabstandeten, unterschiedlichen Transformationspositionen innerhalb des Transformationsbereichs angeordnet. So werden zahlreiche, unterschiedliche Positionsinformationen sowohl von der ersten als auch von der zweiten und/oder einer weiteren Empfangseinheit generiert. Hierbei kann mit Hilfe einer vorteilhaften zeitlichen Synchronisation die jeweilige Position nahezu zeitgleich von den wenigstens zwei Empfangseinheiten erfasst werden. Hiermit können zahlreiche unterschiedliche Daten bzw. Positionen ermittelt werden, die für ein überbestimmtes Gleichungssystem herangezogen werden können. Mit Hilfe der vorteilhaften Koordinatentransformationseinheit bzw. einer mathematischen Berechnung kann dann dieses überbestimmte Gleichungssystem dahingehend verwendet werden, dass die ermittelten Transformationspositionen bzw. Ortsangaben eine Translation und beliebige Rotation im Raum bzw. im Koordinatensystem erfahren. So kann in vorteilhafter Weise das gemeinsame Koordinatensystem generiert werden.

Durch die Überbestimmung des generierten Gleichungssystems bzw. der umfangreichen Positionsangaben kann in vorteilhafter Weise eine Fehlerausgleichsberechnung durchgeführt werden. Damit kann die Genauigkeit der Koordinatentransformation bzw. des gemeinsamen Koordinatensystems zum Beispiel im Vergleich zu einer Transformation mit nur drei voneinander beabstandeten unterschiedlichen Transformationspositionen deutlich erhöht werden.

In vorteilhafter Weise generiert die Koordinatentransformationseinheit den gemeinsamen Koordinatenursprung des gemeinsamen Koordinatensystems und/oder die gemeinsame Raumorientierung des gemeinsamen Koordinatensystems mittels mathematischer Verfahren.

Vorteilhafterweise sind der erste Koordinatenursprung und/oder die erste Raumorientierung des ersten Koordinatensystems der ersten Empfangseinheit zugleich als der gemeinsame Koordinatenursprung und/oder als die gemeinsame Raumorientierung des gemeinsamen Koordinatensystems ausgebildet. Dies bedeutet, dass die zweite Empfangseinheit bzw. die weiteren Empfangseinheiten mit Hilfe der vorteilhaften Koordinatentransformationseinheit ihre jeweiligen Subkoordinatensysteme bzw. einzelnen, separaten Koordinatensysteme mit dem ersten Koordinatensystem synchronisieren bzw. diese zweiten oder weiteren Subkoordinatensysteme entsprechend auf das erste Koordinatensystem transformiert werden.

Vorteilhafterweise wird während der Transformationsphase mit Hilfe einer Visualisierungseinheit bzw. einem Bildschirm oder dergleichen, zum Beispiel mittels einer vorteilhaften grafischen, sich verändernden Darstellung wie ein sich veränderter Anzeigebalken bzw. ein sich verlängernder Anzeigebalken oder dergleichen, die Veränderung der Anzahl der ermittelten Transformationspositionen und/oder beispielsweise mit Hilfe einer Prozentangabe bzw. -anzeige der jeweiligen Person verdeutlicht, wie weit fortgeschritten die Transformation bzw. die Transformationsphase ist. Ist beispielsweise ein entsprechender grafischer Balken oder dergleichen vollständig farblich ausgefüllt, symbolisiert dies z.B. der entsprechenden Person, dass genügend Transformationspositionen bzw. Daten von unterschiedlichen Positionen während der Transformationsphase gesammelt sind und die vorteilhafte Koordinatentransformation zur Erzeugung des gemeinsamen Koordinatensystems erfolgreich abgeschlossen ist.

Erfindungsgemäß ist zwischen zwei separaten Bewegungsphasen der Sender an einer als Trigger-Position ausgebildeten Transformationsposition innerhalb des Transformationsbereichs angeordnet, wobei in der Trigger-Position des Senders zumindest eine der wenigstens zwei Empfangseinheiten einen Trigger-Impuls für die Koordinatentransformationseinheit auslöst. Das bedeutet u.a., dass die Empfangseinheiten in vorteilhafter Weise erfassen können, ob sich der Sender bewegt oder stillsteht. Bevorzugt wird ein Stillstand bzw. die Ruheposition des Senders nach einer Bewegungsphase bzw. einer Bewegung als Trigger- bzw. Startpunkt für die Erfassung der jeweiligen Transformationsposition ausgebildet. Beispielsweise wird der Bedienperson angezeigt, dass eine entsprechende Ruheposition bzw. Transformationsposition derzeit ermittelt wird und ein akustisches und/oder visuelles Signal der Bedienperson gegeben wird, sodass diese den Sender anschließend wieder bewegt, insbesondere zu einer zweiten bzw. weiteren Transformationsposition, insbesondere einer weiteren Ruheposition. So kann in vorteilhafter Weise eine weitere bzw. zweite separate Transformationsposition von den jeweiligen Empfangseinheiten ermittelt werden. Dies kann sich mehrfach wiederholen, bis eine vorteilhafte Anzahl an unterschiedlichen Transformationspositionen zwischen entsprechend unterbrochenen Bewegungsphasen des Senders vorhanden ist.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: eine schematische Darstellung einer ersten erfindungsgemäßen Fertigungsassistenzvorrichtung und
- Figur 2: eine schematische Darstellung einer zweiten erfindungsgemäßen Fertigungsassistenzvorrichtung bei einem Montageband.

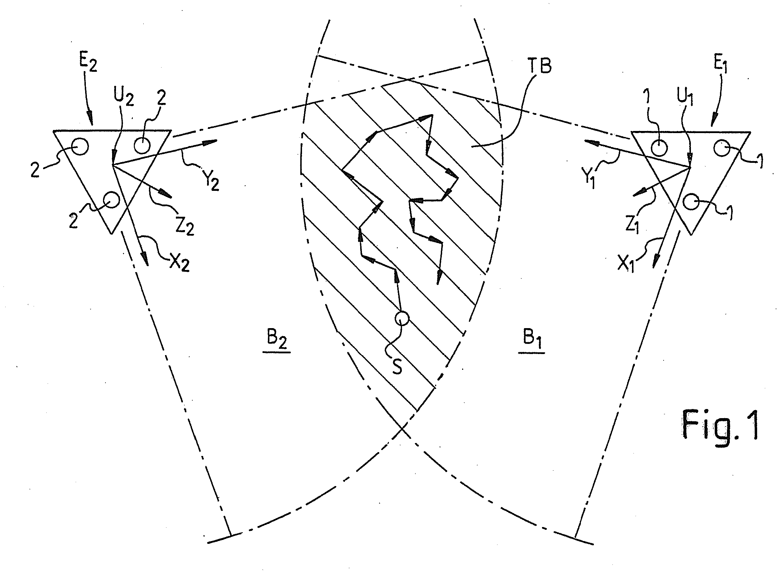

In Figur 1 ist eine erste Fertigungsassistenzvorrichtung mit einer ersten Empfängereinheit E₁ und einer zweiten Empfängereinheit E₂ an zwei voneinander beabstandeten Positionen angeordnet. Die beiden separaten Empfängereinheiten E₁ und E₂ sind als separat handhabbare und montierbare, jeweils im Wesentlichen einstückige Baueinheit ausgebildet und weisen jeweils separate Koordinatensysteme auf. Die Koordinatensysteme sind vorzugsweise als dreidimensionale orthogonale Koordinatensysteme mit drei senkrecht zueinander ausgerichteten Koordinatenachsen X, Y, Z sowie dem Koordinatenursprung U ausgebildet.

Dementsprechend ist jedes Koordinatensystem bzw. jede Empfängereinheit E₁ und E₂ bereits für sich alleine zur Ortung eines Senders S bzw. Gegenstands mit Sender S fähig. Zur exakten Festlegung des jeweiligen Koordinatensystems der E₁ bzw. E₂ umfassen diese jeweils drei Ultraschall-Empfänger 1 bzw. 2, womit jeweils für die Empfangseinheit E₁ und E₂ die drei jeweiligen Koordinatenachsen X, Y, Z und der jeweilige Koordinatenursprung U eindeutig festgelegt werden können.

Um von Signalsendern bzw. den Ultraschall- Sendern S die Position im Raum bestimmen zu können, wird in vorteilhafter Weise zuerst im Empfangsbereich B₁ und B₂ bzw. dem jeweiligen Aktionsraum des Empfängers bzw. der Empfangseinheiten E₁ und E₂ das jeweilige Koordinatensystem definiert, das als Bezugsgröße für die Sender S und den Empfänger bzw. der Empfangseinheit E₁ und E₂ gilt. Sowohl die Empfänger bzw. Empfangseinheiten E₁ und E₂ als auch der/die Sender S besitzen einen technisch sinnvollen und auch realisierbaren Aktionsbereich bzw. Ortungsbereich.

Wird die Funktion der Positionsbestimmung von Sendern S auf einen größeren Aktionsradius als ein einzelner Bereich B ausgeweitet, so wird gemäß der Erfindung mit Hilfe von mehreren Empfängern bzw. Empfangseinheiten E₁ und E₂, die derart installiert und logisch bzw. datentechnisch in vorteilhafter Weise verknüpft werden, dass diese wie eine gemeinsame Empfangseinheit mit einem großen Aktionsradius bzw. einem gemeinsamen Koordinatensystem wirken. Hiermit wird erreicht, dass alle verwendeten Empfänger bzw. Empfangseinheiten E₁ und E₂ ein gemeinsames Koordinatensystem verwenden und die Positionsbestimmung über einen gesamten Fertigungsabschnitt in vorteilhafter Weise erfolgen kann. Hierbei wird das Einrichten eines gemeinsamen Koordinatensystems mit sehr geringem Aufwand möglich, wobei auch technisch wenig begabte Nutzer bzw. Bedienpersonen mit geringem Aufwand dazu in der Lage sind.

Die Empfänger, das heißt zwei oder mehrere bzw. Empfangseinheiten E₁ und E₂, werden in vorteilhafter Weise derart im Arbeitsbereich installiert bzw. angeordnet, dass die Aktionsradien der einzelnen Empfänger sich in vorteilhafter Weise in einem schraffiert dargestellten Transformationsbereich TB überlappen. Die Empfänger bzw. Empfangseinheiten E₁ und E₂ werden hierbei in vorteilhafter Weise synchron miteinander verschaltet bzw. arbeiten synchron. In den Überlappungsbereich bzw. Transformationsbereich TB wird ein Sender S in vorteilhafter Weise eingebracht, wobei der Sender S im Überlappungsbereich TB in einem angemessenen großen Bereich hin und her bewegt wird (vgl. Pfeile in der schraffierten Fläche in Figur 1), wobei jeder Pfeilanfang als eine Transformationsposition zur Ermittlung von Transformationsinformationen bzw. Koordinaten ausgebildet ist. Durch das vorteilhafte Bewegen des Senders S entsteht in den jeweiligen beiden Empfängern bzw. Empfangseinheiten E₁ und E₂ eine Art "Datenwolke" von sich im Raum befindlicher Punkte. Jedem Punkt sind beispielsweise X, Y, Z-Daten/-Koordinaten von beiden Empfangseinheiten E₁ und E₂ zugeordnet. Diese werden beispielsweise zur gleichen Zeit aus der jeweiligen Position des Senders S durch die Empfangseinheiten E₁ und E₂ ermittelt.

Aus den jeweiligen Daten bzw. Positionen/Koordinaten wird in vorteilhafter Weise ein überbestimmtes Gleichungssystem aufgestellt. Durch Koordinatentransformation erfahren die Punkte eine Translation und beliebige Rotation im Raum. Durch vorteilhaftes Verrechnen wird dann vorzugsweise in einen Empfänger bzw. eine der Empfangseinheiten E₁ oder E₂ in vorteilhafter Weise der gemeinsame Ursprung U des gemeinsamen Koordinatensystems gelegt. Alle weiteren, nicht näher dargestellten Empfänger bzw. Empfangseinheiten Eₙ setzen beispielsweise darauf auf.

Während dem Sammeln der Daten bzw. der "Punktewolke" und der Berechnung wird dem Benutzer beispielsweise auf seinem Bildschirm bzw. mittels eines grafischen Balkens oder mit farbiger Darstellung visualisiert, wann die Menge der Raumpunkte bzw. die "Punktewolke" für die Rechenoperation bzw. die Koordinatentranslation ausreicht bzw. vollständig ist. Ist der Verlauf der Balken komplett ausgefüllt oder die Signalfläche z.B. grün, sind genügend Punkte von unterschiedlichen Orten gesammelt und die Berechnung des Koordinatensystems ist erfolgreich abgeschlossen.

Vorzugsweise ist ein nicht näher dargestelltes Rechensystem zur Koordinatenbestimmung bzw. Koordinatentransformation vorgesehen.

Generell ist wesentlich, dass hier die Empfangseinheit E₁ und E₂ ohne große Genauigkeitsanforderungen separat montiert werden können, d.h. in Bezug auf die Betriebsposition und die Ausrichtung der jeweiligen Koordinatenachsen. Durch die erfindungsgemäße Koordinatentransformation wird das gemeinsame Koordinatensystem generiert und hierbei die beiden oder mehreren ursprünglich separaten Koordinatensysteme der Empfangseinheiten E₁ und E₂ miteinander verbunden bzw. zu einem einzigen Betriebs-/Arbeitskoordinatensystem ausgebildet bzw. "verschmolzen". So wird im Betreib der gesamte, realisierte Ortungsbereich entsprechend vergrößert, so dass auch in größeren Fertigungshallen ein gemeinsames Koordinatensystem mittels mehrerer Empfangseinheiten E₁ und E₂ verwirklicht werden kann.

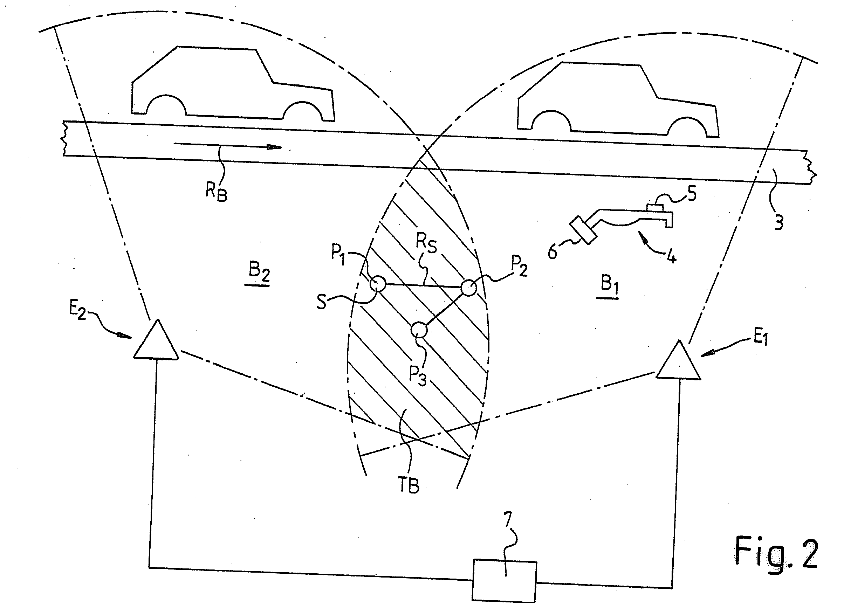

In Figur 2 ist eine weitere Fertigungsassistenzvorrichtung dargestellt. Hierbei sind die Empfangseinheiten E₁ und E₂ im Bereich eines Montagebandes 3 z.B. zur Montage von Autos angeordnet. Hierbei wird in vorteilhafter Weise von einer Person während einer Transformationsphase der Sender S von einer ersten Transformationsposition P₁ entlang einer Richtung Rₛ zu einer zweiten Transformationsposition P₂ und anschließend zu einer Transformationsposition P₃ bewegt. Die Richtung Rₛ ist nahezu parallel und insbesondere gleich ausgerichtet wie die Transportrichtung R_{B} des Montagebandes 3. Hiermit kann in vorteilhafter Weise das gemeinsame Koordinatensystem der Empfangseinheiten E₁ und E₂ auf das Montageband 3 bzw. dessen Transportrichtung R_{B} mit Hilfe einer Transformationseinheit 7 transformiert werden.

Darüber hinaus ist in Figur 2 auch beispielhaft ein AkkuSchrauber 4 mit einer Sendereinheit 5 und einem Akku 6 abgebildet, womit während der Fertigung z.B. nicht näher dargestellte Komponenten an die Autos geschraubt werden.

Die Identifizierung und/oder Steuerung des Schraubers 4 und/oder der Schraubpositionen/-abläufe etc. erfolgt in bereits bekannter Weise, z.B. mittels einer bidirektionalen Kommunikation, gegebenenfalls auch zusätzlich per Funksignale, wobei die Empfangseinheiten E₁ und E₂ nicht nur die Ultraschall-Empfänger 1, 2, sondern auch Sender, insbesondere Funksender, aufweisen. Entsprechend können die Sender S des Schraubers 4 oder dergleichen auch einen Funkempfänger oder dergleichen aufweisen.

Es hat sich gezeigt, dass vor allem aufgrund der Thematiken Datenverarbeitung, Energieversorgung und/oder Handhabbarkeit eines mobilen, insb. manuell geführten Gegenstandes bzw. Werkzeuges, es von besonderem Vorteil ist, dass der Gegenstand den Sender S umfasst. Generell kann jedoch auch im Sinn der Erfindung der Gegenstand eine Empfangseinheit E₁ und E₂ umfassen und hierbei dann der Sender S an einer festen Position in einer Fertigungshalle, an/neben einem Montageband oder dergleichen angeordnet werden, womit die Ortung des Gegenstandes bzw. eines mobilen Empfängers realisiert wird. D.h. im Sinn der Erfindung kann auch die Empfangseinheit E₁ und E₂ jeweils als eine Sendereinheit S₁ und S₂ sowie der Sender S als Empfänger bzw. Empfangseinheit E₁ oder E₂ ausgebildet werden.

### Bezugszeichenliste

- 1: Empfänger
- 2: Empfänger
- 3: Montageband
- 4: Schrauber
- 5: Sender
- 6: Akku
- 7: Einheit

- B: Ortungsbereich
- E: Empfangseinheit
- P: Position
- R: Richtung
- S: Sender
- TB: Transformationsbereich
- U: Koordinatenursprung
- X: Koordinatenachse
- Y: Koordinatenachse
- Z: Koordinatenachse

## Patentansprüche

1. Fertigungsassistenzvorrichtung mit wenigstens einem Sender (S) zum Senden von Ultraschall und mit wenigstens einer ersten Empfangseinheit (E) zum Empfangen von Ultraschall mittels Laufzeitmessung eines Ultraschall-Messsignals und mit einer Ultraschall-Ortungseinheit zur Ultraschall-Ortung des wenigstens einen Senders (S) zum Senden von Ultraschall oder von mit dem wenigstens einen Sender (S) verbundenen Gegenständen (4), wie Werkzeuge und/oder Werkstücke und/oder Bauelemente oder dergleichen, durch Bestimmung eines Abstandes des Senders (S) von wenigstens der einen ersten Empfangseinheit (E) zum Empfangen von Ultraschall mittels Laufzeitmessung des Ultraschall-Messsignals, wobei der wenigstens ersten Empfangseinheit (E) ein erstes, einen ersten Koordinatenursprung (U) umfassendes Koordinatensystem zur Bestimmung der Position des wenigstens einen Senders (S) und/oder des Gegenstandes (4) mit ersten Koordinaten (X, Y, Z) zugeordnet ist, wobei wenigstens eine zweite Empfangseinheit (E) zum Empfangen von Ultraschall mittels Laufzeitmessung des Ultraschall-Messsignals vorgesehen ist, wobei der zweiten Empfangseinheit (E) ein zweites, einen zweiten Koordinatenursprung (U) und/oder eine andere Raumorientierung umfassendes Koordinatensystem zur Bestimmung der Position des wenigstens einen Senders (S) und/oder des Gegenstandes (4) mit zweiten Koordinaten (X, Y, Z) zugeordnet ist, und wobei eine Koordinatentransformationseinheit (7) zum Transformieren zumindest eines der wenigstens zwei Koordinatensysteme vorgesehen ist, so dass den wenigstens zwei Empfangseinheiten (E) ein gemeinsames, einen gemeinsamen Koordinatenursprung (U) und/oder eine gemeinsame Raumorientierung umfassendes Koordinatensystem zugeordnet ist, wobei die erste Empfangseinheit (E) einen ersten Empfangsbereich (B) und die zweite Empfangseinheit (E) einen zweiten Empfangsbereich (B) aufweist, wobei die wenigstens zwei Empfangsbereiche (B) einen gemeinsamen Überlappungsbereich (TB) aufweisen, und wobei der Überlappungsbereich (TB) als Transformationsbereich (TB) der Koordinatentransformationseinheit (7) ausgebildet ist, wobei die Koordinatentransformationseinheit (7) derart ausgebildet ist, dass während einer Transformationsphase wenigstens der zumindest eine Sender (S) im Transformationsbereich (TB) angeordnet ist und/oder sich bewegt, und dass innerhalb des Transformationsbereichs (TB) eine als Trigger-Position ausgebildete Transformationsposition (P) des wenigstens einen Senders (S) vorgesehen ist, wobei zwischen zwei separaten Bewegungsphasen der zumindest eine Sender (S) an der als Trigger-Position ausgebildeten Transformationsposition (P) innerhalb des Transformationsbereichs (TB) angeordnet ist, **dadurch gekennzeichnet, dass** zumindest eine der wenigstens zwei Empfangseinheiten (E) derart ausgebildet ist, dass diese in der Trigger-Position des wenigstens einen Senders (S) einen Trigger-Impuls für die Koordinatentransformationseinheit (7) auslöst, und erfassen kann, ob sich der Sender bewegt oder stillsteht, und einen Stillstand des Senders nach einer Bewegungsphase als Triggerpunkt für die Erfassung der jeweiligen Transformationsposition zu nutzen.

2. Vorrichtung nach Anspruch 1, **dadurch gekennzeichnet, dass** das/die Koordinatensysteme als dreidimensionale und/oder geradlinige und/oder orthogonale Koordinatensysteme ausgebildet sind.

3. Vorrichtung nach einem der vorgenannten Ansprüche, **dadurch gekennzeichnet, dass** der Sender (S) während der Transformationsphase an wenigstens drei voneinander beabstandeten, unterschiedlichen Transformationspositionen (P) innerhalb des Transformationsbereichs (TB) angeordnet ist.

4. Vorrichtung nach einem der vorgenannten Ansprüche, **dadurch gekennzeichnet, dass** während der Transformationsphase wenigstens zwei Transformationspositionen (P) des Senders (S) innerhalb des Transformationsbereichs (TB) im Wesentlichen parallel zu einer Längsachse und/oder Bearbeitungsrichtung (R) einer Bearbeitungsanlage (3) zum Bearbeiten oder Fertigen von Werkstücken und/oder Produkten ausgerichtet sind.

5. Vorrichtung nach einem der vorgenannten Ansprüche, **dadurch gekennzeichnet, dass** der gemeinsame Koordinatenursprung (U) und/oder die gemeinsame Raumorientierung des gemeinsamen Koordinatensystems auf der Längsachse der Bearbeitungsanlage angeordnet ist.

6. Vorrichtung nach einem der vorgenannten Ansprüche, **dadurch gekennzeichnet, dass** der Sender (S) während der Transformationsphase an wenigstens 50 voneinander beabstandeten, unterschiedlichen Transformationspositionen (P) innerhalb des Transformationsbereichs (TB) angeordnet ist.

7. Vorrichtung nach einem der vorgenannten Ansprüche, **dadurch gekennzeichnet, dass** der erste Koordinatenursprung (U) und/oder die erste Raumorientierung des ersten Koordinatensystems der ersten Empfangseinheit (E) zugleich als der gemeinsame Koordinatenursprung (U) und/oder als die gemeinsame Raumorientierung des gemeinsamen Koordinatensystems ausgebildet ist.

8. Fertigungsassistenzverfahren mit einer Ultraschall-Ortung zur Ultraschall-Ortung von Sendern (S) zum Senden von Ultraschall oder von mit den Sendern (S) verbundenen Gegenständen (4), wie Werkzeuge und/oder Werkstücke und/oder Bauelemente oder dergleichen, durch Bestimmung eines Abstandes des Senders (S) von wenigstens einer ersten Empfangseinheit (E) zum Empfangen von Ultraschall mittels Laufzeitmessung eines Ultraschall-Messsignals, wobei wenigstens der ersten Empfangseinheit (E) ein erstes, einen ersten Koordinatenursprung (U) umfassendes Koordinatensystem zur Bestimmung der Position (P) des Senders (S) und/oder des Gegenstandes (4) mit ersten Koordinaten (X, Y, Z) zugeordnet wird, wobei wenigstens eine zweite Empfangseinheit (E) zum Empfangen von Ultraschall mittels Laufzeitmessung des Ultraschall-Messsignals verwendet wird, wobei der zweiten Empfangseinheit (E) ein zweites, einen zweiten Koordinatenursprung (U) und/oder eine andere Raumorientierung umfassendes Koordinatensystem zur Bestimmung der Position (P) des Senders (S) und/oder des Gegenstandes (4) mit zweiten Koordinaten (X, Y, Z) zugeordnet wird, und wobei eine Koordinatentransformation zum Transformieren zumindest eines der wenigstens zwei Koordinatensysteme vorgesehen wird, so dass den wenigstens zwei Empfangseinheiten (E) ein gemeinsames, einen gemeinsamen Koordinatenursprung (U) und/oder eine gemeinsame Raumorientierung umfassendes Koordinatensystem zugeordnet wird und wobei die erste Empfangseinheit (E) einen ersten Empfangsbereich (B) und die zweite Empfangseinheit (E) einen zweiten Empfangsbereich (B) aufweist, wobei die wenigstens zwei Empfangsbereiche (B) einen gemeinsamen Überlappungsbereich (TB) aufweisen, und wobei der Überlappungsbereich (TB) als Transformationsbereich (TB) der Koordinatentransformationseinheit (7) ausgebildet wird, wobei während einer Transformationsphase wenigstens ein Sender (S) im Transformationsbereich (TB) angeordnet wird und/oder sich bewegt, und wobei innerhalb des Transformationsbereichs (TB) eine als Trigger-Position ausgebildete Transformationsposition (P) des wenigstens einen Senders (S) vorgesehen ist, wobei zwischen zwei separaten Bewegungsphasen der zumindest eine Sender (S) an der als Trigger-Position ausgebildeten Transformationsposition (P) innerhalb des Transformationsbereichs (TB) angeordnet ist, **dadurch gekennzeichnet, dass** zumindest eine der wenigsten zwei Empfangseinheiten (E) in der Trigger-Position des wenigstens eines Senders (S) einen Trigger-Impuls für die Koordinatentransformationseinheit (7) auslöst und erfassen kann, ob sich der Sender bewegt oder stillsteht, und einen Stillstand des Senders nach einer Bewegungsphase als Triggerpunkt für die Erfassung der jeweiligen Transformationsposition nutzt.

## Claims

1. A manufacturing assistance device having at least one transmitter (S) for transmitting ultrasound and having at least a first receiving unit (E) for receiving ultrasound by measuring the propagation time of an ultrasonic measuring signal and having an ultrasonic locating unit for the ultrasonic location of the at least one transmitter (S) for transmitting ultrasound or of objects (4) connected to the at least one transmitter (S), such as tools and/or workpieces and/or components or the like, by determining a distance of the transmitter (S) from at least the one first receiving unit (E) for receiving ultrasound by measuring the propagation time of the ultrasonic measuring signal, wherein a first coordinate system comprising a first coordinate origin (U) for determining the position of the at least one transmitter (S) and/or of the object (4) with first coordinates (X, Y, Z) is assigned to at least the first receiving unit (E), wherein at least a second receiving unit (E) for receiving ultrasound by measuring the propagation time of the ultrasonic measuring signal is provided, wherein a second coordinate system comprising a second coordinate origin (U) and/or another spatial orientation for determining the position of the at least one transmitter (S) and/or of the object (4) with second coordinates (X, Y, Z) is assigned to the second receiving unit (E), and wherein a coordinate transformation unit (7) for transforming at least one of the at least two coordinate systems is provided such that a common coordinate system comprising a common coordinate origin (U) and/or a common spatial orientation is assigned to the at least two receiving units (E), wherein the first receiving unit (E) has a first reception range (B) and the second receiving unit (E) has a second reception range (B), and wherein the at least two reception ranges (B) have a common overlap range (TB), and wherein the overlap range (TB) is configured as a transformation range (TB) of the coordinate transformation unit (7), wherein the coordinate transformation unit (7) is configured in such a way that, during a transformation phase, the at least one transmitter (S) is disposed and/or moves in the transformation range (TB), and that within the transformation range (TB), provision is made of a transformation position (P) configured as a trigger position of the at least one transmitter (S), wherein the at least one transmitter (S) is disposed at the transformation position (P) configured as a trigger position between two separate movement phases within the transformation range (TB), **characterized in that** at least one of the at least two receiving units (E) is configured in such a way that, in the trigger position of the at least one transmitter (S), it triggers a trigger pulse for the coordinate transformation unit (7), and is able to detect whether the transmitter is moving or stationary, and uses a standstill of the transmitter after a movement phase as a trigger point for detecting the corresponding transformation position.

2. The device according to Claim 1, **characterized in that** the coordinate system(s) is/are configured as three-dimensional and/or as rectilinear and/or as orthogonal coordinate systems.

3. The device according to any one of the aforementioned claims, **characterized in that** during the transformation phase, the transmitter (S) is disposed at least three different transformation positions (P), which are separated from one another, within the transformation range (TB).

4. The device according to any one of the aforementioned claims, **characterized in that** during the transformation phase, at least two transformation positions (P) of the transmitter (S) are aligned within the transformation range (TB) essentially parallel to a longitudinal axis and/or machining direction (R) of a machining unit (3) for machining or manufacturing workpieces and/or products.

5. The device according to any one of the aforementioned claims, **characterized in that** the common coordinate origin (U) and/or the common spatial orientation of the common coordinate system is/are disposed on the longitudinal axis of the machining unit.

6. The device according to any one of the aforementioned claims, **characterized in that** during the transformation phase, the transmitter (S) is disposed at least 50 different transformation positions (P), which are separated from one another, within the transformation range (TB).

7. The device according to any one of the aforementioned claims, **characterized in that** the first coordinate origin (U) and/or the first spatial orientation of the first coordinate system of the first receiving unit (E) is/are configured as the common coordinate origin (U) and/or also as the common spatial orientation of the common coordinate system.

8. A manufacturing assistance method having an ultrasonic locating for the ultrasonic location of transmitters (S) for transmitting ultrasound or of objects (4) such as tools and/or workpieces and/or components or the like connected to the transmitters (S), by determining a distance of the transmitter (S) from at least a first receiving unit (E) for receiving ultrasound by measuring the propagation time of an ultrasonic measurement signal, wherein a first coordinate system comprising a first coordinate origin (U) for determining the position (P) of the transmitter (S) and/or of the object (4) with first coordinates (X, Y, Z) is assigned to at least the first receiving unit (E), wherein at least a second receiving unit (E) is used for receiving ultrasound by measuring the propagation time of the ultrasonic measurement signal, wherein a second coordinate system comprising a second coordinate origin (U) and/or another spatial orientation for determining the position (P) of the transmitter (S) and/or of the object (4) with second coordinates (X, Y, Z) is assigned to the second receiving unit (E), and wherein a coordinate transformation for transforming at least one of the at least two coordinate systems is provided, such that a common coordinate system comprising a common coordinate origin (U) and/or a common spatial orientation is assigned to the at least two receiving units (E) and wherein the first receiving unit (E) has a first reception range (B) and the second receiving unit (E) has a second reception range (B), wherein the at least two reception ranges (B) have a common overlap range (TB), and wherein the overlap range (TB) is configured as a transformation range (TB) of the coordinate transformation unit (7), wherein during a transformation phase, at least one transmitter (S) is disposed and/or moves in the transformation range (TB), and wherein within the transformation range (TB), a transformation position (P) configured as a trigger position of the at least one transmitter (S) is provided, wherein between two separate movement phases, the at least one transmitter (S) is disposed within the transformation range (TB) at the transformation position (P) configured as a trigger position, **characterized in that** at least one of the at least two receiving units (E), in the trigger position of the at least one transmitter (S), triggers a trigger pulse for the coordinate transformation unit (7) and is able to detect whether the transmitter (S) is moving or stationary, and uses a standstill of the transmitter after a movement phase as a trigger point for detecting the corresponding transformation position.

## Revendications

1. Dispositif d'aide à la fabrication avec au moins un émetteur (S) destiné à émettre des ultrasons et avec au moins une première unité de réception (E) destinée à recevoir des ultrasons en mesurant le temps de transit d'un signal de mesure ultra sonore et avec une unité de localisation aux ultrasons pour la localisation aux ultrasons d'au moins dudit émetteur (S) destiné à émettre des ultrasons ou d'objets (4) reliés à au moins ledit émetteur (S), tels que des outils et/ou des pièces et/ou des composants ou analogues, en déterminant une distance de l'émetteur (S) par rapport à au moins la première unité de réception (E) destinée à recevoir des ultrasons en mesurant le temps de transit du signal de mesure ultra sonore, un premier système de coordonnées comprenant une première origine de coordonnées (U) pour déterminer la position de l'au moins un émetteur (S) et/ou de l'objet (4) avec des premières coordonnées (X, Y, Z) étant associé à l'au moins première unité de réception (E), au moins une deuxième unité de réception (E) destinée à recevoir des ultrasons en mesurant le temps de transit du signal de mesure ultra sonore étant prévue, un deuxième système de coordonnées comprenant une deuxième origine de coordonnées (U) et/ou une orientation spatiale différente pour déterminer la position dudit au moins un émetteur (S) et/ou de l'objet (4) avec des deuxièmes coordonnées (X, Y, Z) étant associé à la deuxième unité de réception (E), et une unité de transformation de coordonnées (7) étant prévue pour transformer au moins l'un des au moins deux systèmes de coordonnées, de sorte qu'un système de coordonnées commun comprenant une origine commune des coordonnées (U) et/ou une orientation spatiale commune est associé aux au moins deux unités de réception (E), la première unité de réception (E) ayant une première zone de réception (B) et la deuxième unité de réception (E) ayant une deuxième zone de réception (B), les au moins deux zones de réception (B) ayant une zone de chevauchement (TB) commune, et la zone de chevauchement (TB) étant conçue comme une zone de transformation (TB) de l'unité de transformation de coordonnées (7), l'unité de transformation des coordonnées (7) étant conçue de telle sorte que, pendant une phase de transformation, ledit au moins un émetteur (S) est disposé et/ou se déplace dans la zone de transformation (TB), et qu'une position de transformation (P), conçue comme une position de déclenchement, dudit au moins un émetteur (S) est prévue à l'intérieur de la zone de transformation (TB), ledit au moins un émetteur (S) étant disposé, entre deux phases de déplacement séparées, dans la position de transformation (P) conçue comme position de déclenchement à l'intérieur de la zone de transformation (TB), **caractérisé en ce qu'**au moins une des au moins deux unités de réception (E) est conçue de telle sorte que, dans la position de déclenchement dudit au moins un émetteur (S), elle déclenche une impulsion de déclenchement pour l'unité de transformation de coordonnées (7) et peut détecter si l'émetteur se déplace ou est arrêté, et utiliser un arrêt de l'émetteur après une phase de déplacement comme point de déclenchement pour la détection de la position de transformation respective.

2. Dispositif selon la revendication 1, **caractérisé en ce que** le ou les systèmes de coordonnées sont réalisés sous forme de systèmes de coordonnées tridimensionnels et/ou rectilignes et/ou orthogonaux.

3. Dispositif selon l'une des revendications précédentes, **caractérisé en ce que** l'émetteur (S) est disposé dans au moins trois positions de transformation (P) différentes espacées les unes des autres à l'intérieur de la zone de transformation (TB) pendant la phase de transformation.

4. Dispositif selon l'une quelconque des revendications précédentes, **caractérisé en ce que**, pendant la phase de transformation, au moins deux positions de transformation (P) de l'émetteur (S) à l'intérieur de la zone de transformation (TB) sont orientées de manière sensiblement parallèle à un axe longitudinal et/ou à une direction de traitement (R) d'un système de traitement (3) pour le traitement ou la fabrication de pièces et/ou de produits.

5. Dispositif selon l'une quelconque des revendications précédentes, **caractérisé en ce que** l'origine commune des coordonnées (U) et/ou l'orientation spatiale commune du système de coordonnées commun est disposée sur l'axe longitudinal du système de traitement.

6. Dispositif selon l'une quelconque des revendications précédentes, **caractérisé en ce que**, pendant la phase de transformation, l'émetteur (S) est disposé dans au moins 50 positions de transformation (P) différentes espacées les unes des autres à l'intérieur de la zone de transformation (TB).

7. Dispositif selon l'une quelconque des revendications précédentes, **caractérisé en ce que** la première origine des coordonnées (U) et/ou la première orientation spatiale du premier système de coordonnées de la première unité de réception (E) est conçue en même temps comme l'origine commune des coordonnées (U) et/ou l'orientation spatiale commune du système de coordonnées commun.

8. Procédé d'aide à la fabrication avec localisation aux ultrasons pour la localisation aux ultrasons d'émetteurs (S) destinés à émettre des ultrasons ou d'objets (4) reliés aux émetteurs (S), tels que des outils et/ou des pièces et/ou des composants ou analogues, en déterminant une distance de l'émetteur (S) par rapport à au moins une première unité de réception (E) destinée à recevoir des ultrasons en mesurant le temps de transit d'un signal de mesure ultra sonore, un premier système de coordonnées, comprenant une première origine de coordonnées (U), pour déterminer la position (P) de l'émetteur (S) et/ou de l'objet (4) avec des premières coordonnées (X, Y, Z) étant associée à au moins la première unité de réception (E), au moins une deuxième unité de réception (E) étant utilisée pour recevoir des ultrasons en mesurant le temps de transit du signal de mesure ultra sonore, un deuxième système de coordonnées, comprenant une deuxième origine de coordonnées (U) et/ou une orientation spatiale différente, pour déterminer la position (P) de l'émetteur (S) et/ou de l'objet (4) avec des deuxièmes coordonnées (X, Y, Z) étant associée à la deuxième unité de réception (E), et une transformation de coordonnées pour transformer au moins l'un des au moins deux systèmes de coordonnées étant prévue de sorte que au moins lesdites deux unités de réception (E) se voient attribuer un système de coordonnées commun comprenant une origine commune des coordonnées (U) et/ou une orientation spatiale commune, et la première unité de réception (E) ayant une première zone de réception (B) et la deuxième unité de réception (E) une deuxième zone de réception (B), les au moins deux zones de réception (B) ayant une zone de chevauchement (TB) commune, et la zone de chevauchement (TB) étant conçue comme une zone de transformation (TB) de l'unité de transformation de coordonnées (7), au moins un émetteur (S) étant disposé et/ou se déplaçant, pendant une phase de transformation, dans la zone de transformation (TB), et une position de transformation (P) de l'au moins un émetteur (S) conçue comme position de déclenchement étant prévue à l'intérieur de la zone de transformation (TB), ledit au moins un émetteur (S) étant disposé, entre deux phases de déplacement séparées, dans la position de transformation (P) conçue comme position de déclenchement à l'intérieur de la zone de transformation (TB), **caractérisé en ce qu'**au moins une des au moins deux unités de réception (E) déclenche, dans la position de déclenchement dudit au moins un émetteur (S), une impulsion de déclenchement pour l'unité de transformation de coordonnées (7) et peut détecter si l'émetteur se déplace ou est arrêté, et utilise un arrêt de l'émetteur après une phase de déplacement comme point de déclenchement pour la détection de la position de transformation respective.
